# EUROPEAN PATENT APPLICATION

(11) **EP 2 727 681 A1**
(43) Date of publication of application: **07.05.2014**
(21) Application number: 13190970.7
(22) Date of filing: 30.10.2013
(51) Int. Cl.: B23P 15/04, B64C 11/24, F01D 5/14, F04D 29/32

(54) **A manufacturing process of a lightened turbomachine blade**

(30) Priority: 30.10.2012 IT TV20120204
(71) Applicant: Pietro Rosa T.B.M. S.r.l., Maniago (IT)
(72) Inventor: Maurizio, Andrea, 33092 CAVASSO NUOVO (IT)
(74) Representative: Bellemo, Matteo

(57) **Abstract**

A manufacturing process of a lightened blade (1) for turbomachines, comprising the steps of manufacturing a semifinished product (100) provided with an oblong plate-like portion (101) whose shape substantially approximates the shape of the main airfoil-shaped body (5) of the shaped airfoil (3) of the lightened blade (1) to be built; obtaining, substantially at the centre of one of the two faces of said plate-like portion (101), at least one hollow seat (101a) of predetermined shape; positioning in abutment on the surface of the face of the plate-like portion (101) where the hollow seat (101a) is, a covering plate (103), the dimensions of which exceed those of the hollow seat (101a), so as to cover the surface of the face of the plate-like portion (101) where the hollow seat (101a) is, up to the larger lateral edges of the same plate-like portion (101); fixing in a rigid and unmovable way the covering plate (103) on the face of the plate-like portion (101) by means of an adhesive layer or lap welding (7) that affects the perimeter strip or flap of the covering plate (103) that rests directly on the surface of the face of the plate-like portion (101), outside the hollow seat (101a); and finally, stripping/removing, by means of mechanical machining with material removal, the excess material from the resulting work piece, so as to obtain the shaped airfoil (3) of the lightened blade (1).

## Description

The present invention relates to a manufacturing process of a lightened turbomachine blade.

More in detail, the present invention relates to a manufacturing process of a lightened rotor or stator blade to be used in a compressor or in the front fan of a turbine engine for aircraft, use to which the following description will make specific reference without this implying any loss of generality.

As is known, rotor or stator blades of the compressor of a turbine engine for aircraft are basically made up of at least a coupling shank which is structured so as to be engaged and blocked in the rotor disc of the compressor, and a shaped airfoil which rigidly joints to the coupling shank and is arranged so as to cantilevered extend from the rotor disc in an outgoing radial direction when the coupling shank is correctly inserted in the rotor disc.

Since they must resist mechanical stress and extremely high temperatures, the coupling shank and the shaped airfoil are usually made of high resistant metal material, and are also manufactured in a single piece through milling, starting from a single metal block.

Over the years, however, certain manufacturers of turbine engines for aircraft have decided to reduce the inertia and total weight of the turbine engine by using, where possible, blades with a shaped airfoil which is internally hollow, so as drastically to reduce the quantity of metal forming the blade.

Patent application US2006/0039792 describes a manufacturing process for a lightened blade for turbine engines for aircraft, which involves manufacturing, through milling or forging, a semi-finished metal product which roughly copies the shape of the blade to be realized, and realizing, roughly in the centre of one of the two faces of the oblong plate-like tailpiece which contributes to form the shaped airfoil of the blade, a large weight-reducing hollow seat whose shape substantially copies on a reduced scale the shape of the shaped airfoil.

Subsequently, the manufacturing process of the lightened blades involves:
- milling the oblong plate-like tailpiece along the perimeter edge which delimits the mouth of the weight-reducing seat, so as to create, at the mouth of the weight-reducing seat, a perimeter shoulder which continuously surrounds the mouth of the weight-reducing seat;
- cutting and convexing a metal sheet of congruous thickness so as to form a plate-like cover which has a shape complementary to the mouth of the weight-reducing seat, including the perimeter shoulder;
- engaging the cover on the mouth of the weight-reducing seat realised on the face of the oblong plate-like tailpiece of the blade-shaped semi-finished product, resting the perimeter edge of the cover on the perimeter shoulder realised at the mouth of the weight-reducing seat; and lastly
- immovably fixing the plate-like cover to the oblong plate-like tailpiece of the blade-shaped semi-finished product, by continuously welding the perimeter edge of the cover with the facing edge of the perimeter shoulder which delimits the mouth of the weight-reducing seat.

Unfortunately, the admitted tolerances in manufacturing the cover of the weight-reducing seat are generally lower than one tenth of a millimetre, so cutting of the sheet which forms the cover and subsequent positioning of the cover closing the weight-reducing seat must be performed using extremely precise machines, with the costs this involves.

Furthermore, the welding seam formed along the perimeter edge of the cover closing the weight-reducing seat intrinsically has surface imperfections which often require surface grinding operations, with massive material removal in zones with a nominal thickness less than 2-3 millimetres, with the risks this involves on the mechanical strength of the blade.

Lastly, in order to guarantee the mechanical seal between the two pieces, welding must penetrate deeply into the body of the blade-shaped semi-finished product, causing localised alteration of the structure of the crystal lattice of the material. Said alteration may cause cracks to form over the long term.

Aim of the present invention is therefore to provide a manufacturing process of a lightened blade for turbomachines which significantly reduces the production costs of the lightened blades of compressors and front fans of turbine engines for aircraft.

In compliance with these aims, according to the present invention there is provided a manufacturing process of a lightened blade for turbomachines as defined in claim 1 and, preferably, though not necessarily, in any of the dependent claims.

According to the present invention, there is also realized a lightened blade for turbomachines as defined in claim 12 and, preferably, though not necessarily, in any of the dependent claims.

The present invention will now be described with reference to the appended drawings, which illustrate a non-limiting embodiment, wherein:
- Figure 1 is a perspective view of a lightened blade for turbomachines manufactured according to the dictates of the present invention;
- Figure 2 is a cross-section view of the lightened blade of Figure 1 along the cross-section line A-A;
- Figure 3 is a cross-section view of the lightened blade of Figure 1 along the cross-section line B-B;
- Figures 4 and 5 show a schematic view of two steps of the manufacturing process of the lightened blade for tubomachines shown in Figure 1;
- Figure 6 is a cross-section view of the semi-finished product of Figure 5 along the cross-section line A-A;
- Figure 7 is a cross-section view of the semi-finished product of Figure 5 along the cross-section line B-B;
- Figures 8 and 9 show a schematic view of a further step of the manufacturing process of the lightened blade for turbomachines shown in Figure 1; while
- Figure 10 is a cross-section view of a turbine engine for aircraft which is provided with lightened blades manufactured according to the dictates of the present invention.

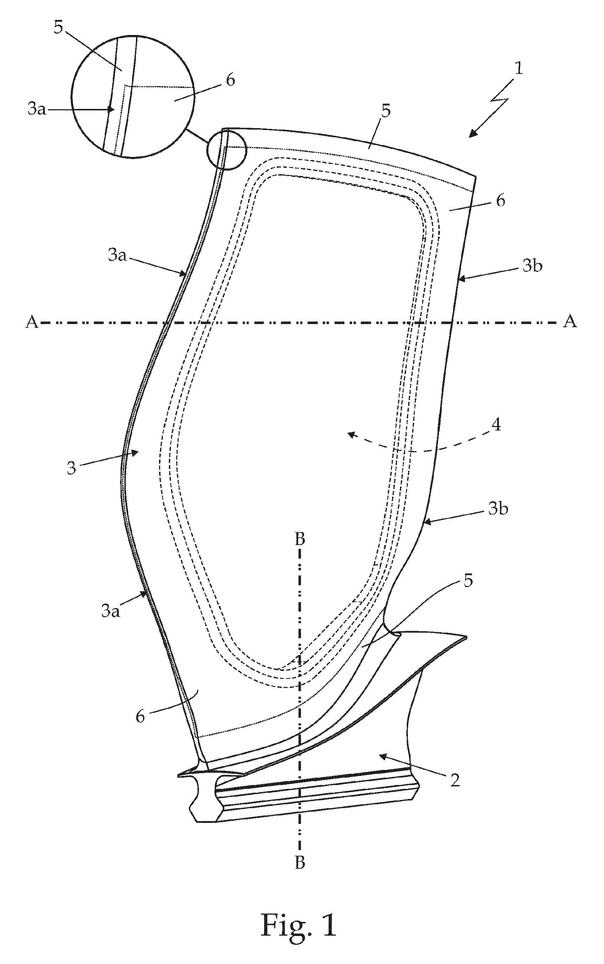

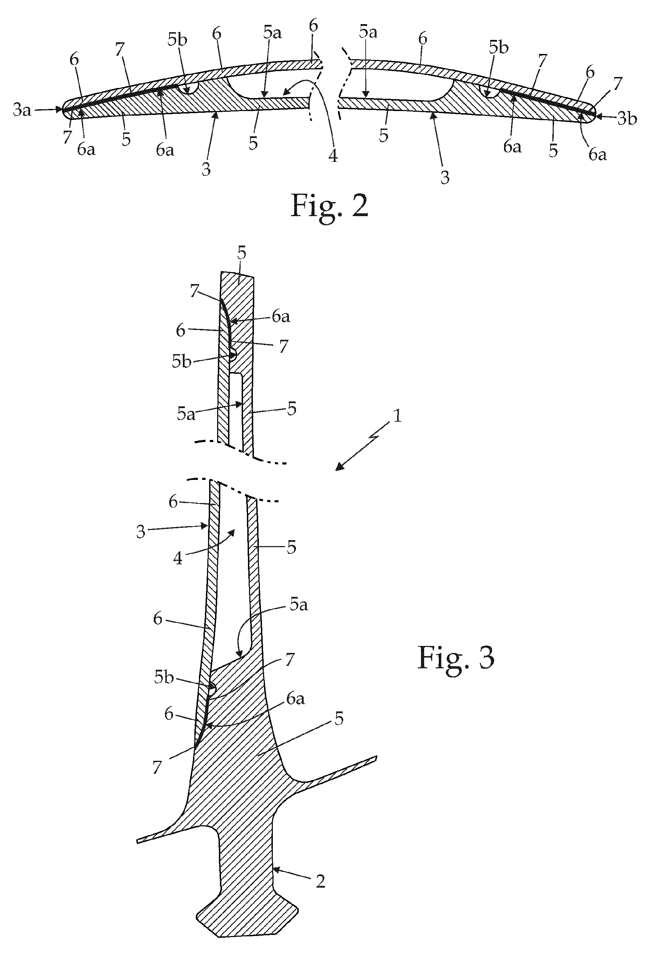

With reference to Figures 1, 2 and 3, number 1 indicates as a whole a lightened blade for turbomachines which may be advantageously used, for example, in the compressor or front fan of a turbine engine for aircraft.

The lightened blade 1 is basically made up of at least one metal coupling shank 2 which is structured so as to be engaged and blocked in the rotor or stator disc (not shown) of the turbine engine, and a metal shaped airfoil 3 which is rigidly coupled/connected with the coupling shank 2 so as to cantilevered extend from the rotor or stator disc of the turbine engine in a substantially outgoing radial direction when the coupling shank 2 is inserted in the disc.

In the example shown, in particular, the coupling shank 2 and the shaped airfoil 3 are preferably, though not necessarily, made of titanium alloy, aluminium alloy or special highly resistant steel.

The shaped airfoil 3 is also internally provided with at least one large closed weight-reducing recess 4, the three-dimensional shape of which preferably, though not necessarily, substantially copies on a reduced scale the three-dimensional shape of the entire shaped airfoil 3.

Differently from currently known lightened blades, the shaped airfoil 3 is made up of a main airfoil-shaped body 5 which is preferably realized in one piece with the coupling shank 2, and moreover presents, substantially in the centre of one of its two larger faces, at least one weight-reducing hollow seat 5a of predetermined shape, which preferably exceeds by 40% the total surface of the face of the main air-foil shaped body 5; and of a plate-like cover 6 which covers the face of the airfoil-shaped body 5 where the hollow seat 5a is located, so as to close the hollow seat 5a and create the weight-reducing recess 4, and is immovably fixed on said face of the airfoil-shaped body 5, by means of lap welding 7 which extends, preferably without interruption, along the entire perimeter strip or flap 6a of the cover 6, which rests directly on the surface of the face of the airfoil-shaped body 5, outside the perimeter of the mouth of the hollow seat 5a.

The term "lap welding" preferably indicates both welding with a lapped joint according to standard UNI EN ISO 17659:2006 (previously UNI EN 12345), and welding with an edge joint according to standard UNI EN ISO 17659:2006 (previously UNI EN 12345).

Preferably, though not necessarily, the shape of the weight-reducing hollow seat 5a also copies on a reduced scale substantially the three-dimensional shape of the entire shaped airfoil 3. The plate-like cover 6, on the other hand, is preferably dimensioned so as to extend on surface of the face of the main airfoil-shaped body 5 which houses the hollow seat 5a, up to reach both larger lateral edges of the main airfoil-shaped body 5, so as to form also part of the leading edge 3a and the trailing edge 3b of the shaped airfoil 3 of the lightened blade 1.

In addition, the plate-like cover 6 preferably covers substantially the entire face of the airfoil-shaped body 5 where the hollow seat 5a is located.

In the example shown, in particular, the plate-like cover 6 is preferably dimensioned so as to extend on the surface of the concave or convex face which houses the hollow seat 5a, up to reach both larger lateral edges of the main airfoil-shaped body 5, so as to also form part of the leading edge 3a and part of the trailing edge 3b of the shaped airfoil 3 of the lightened blade 1.

With reference to Figures 1, 2 and 3, the airfoil-shaped body 5 preferably also presents, on the concave or convex face housing the hollow seat 5a, also an annular perimeter groove 5b, preferably with a substantially semi-circular cross-section, which surrounds the hollow seat 5a preferably without interruption while remaining at a predetermined and preferably, though not necessarily, constant distance from the perimeter edge of the hollow seat 5a; and the lap welding 7 affects the perimeter portion of the face of the main airfoil-shaped body 5 which is located outside the annular groove 5b.

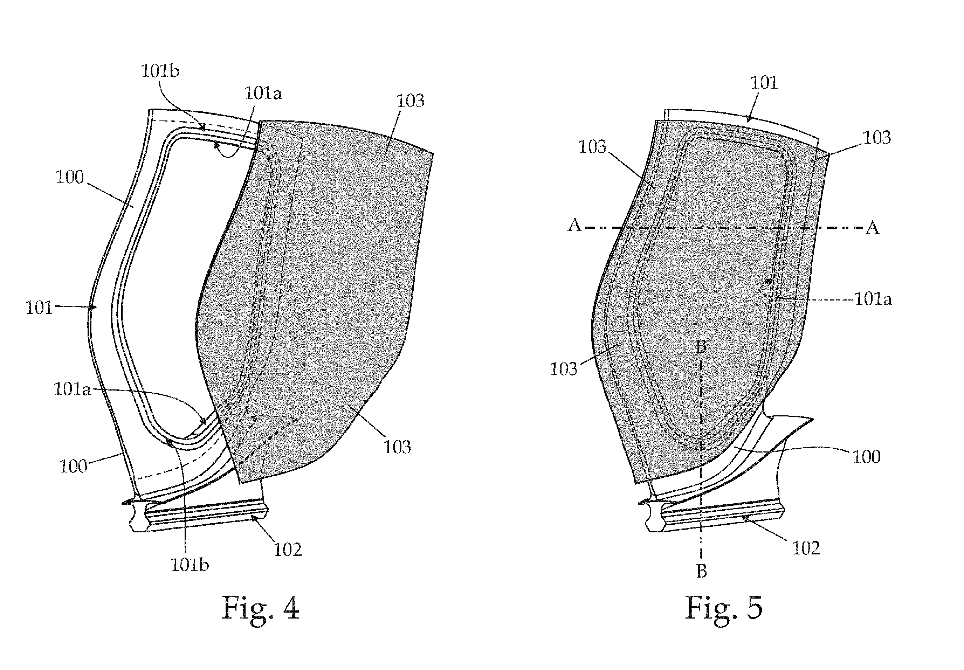

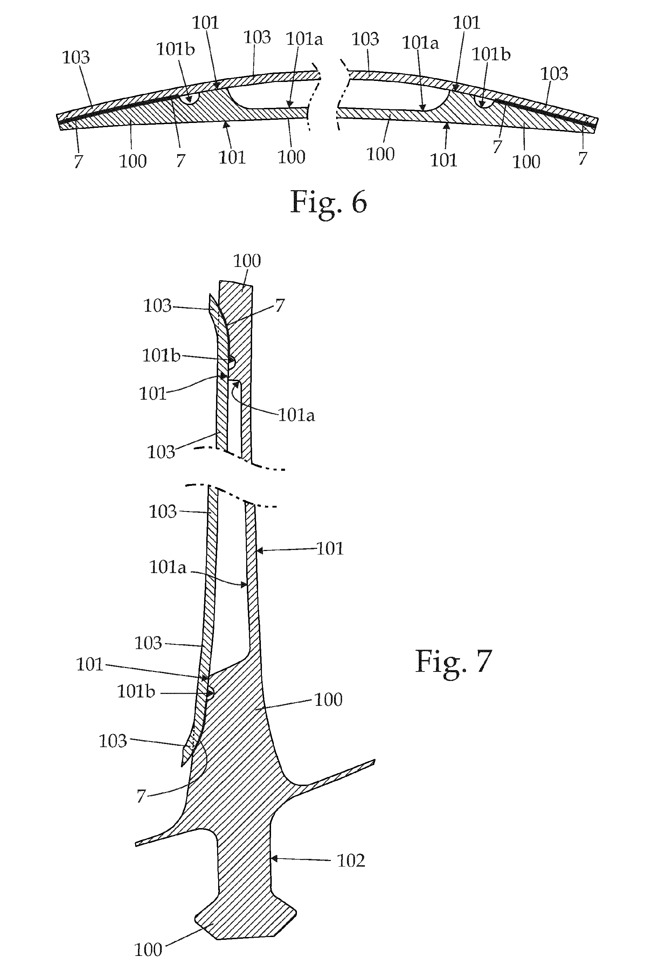

With reference to Figures 4 to 9, the manufacturing process of the lightened blade 1 involves manufacturing, preferably through milling and/or pressing and/or forging and/or smelting, a metal semi-finished product 100 which is provided with an oblong and duly convexed upper plate-like portion 101, the three-dimensional shape of which approximates in excess the shape of the main airfoil-shaped body 5 of the shaped airfoil 3 of the lightened blade 1, and preferably also a lower squat portion 102, the three-dimensional shape of which approximates in excess the shape of the coupling shank 2 of the lightened blade 1.

The manufacturing method of lightened blade 1 also involves realising, substantially in the centre of one of the two large faces of the oblong plate-like portion 101, at least one large hollow seat 101a of a predetermined shape, which preferably has an extension exceeding 40% of the total surface of the same face of the oblong plate-like portion 101; and preferably, though not necessarily, also a perimeter annular groove 101b, preferably with a semi-circular cross-section, which surrounds the hollow seat 101a, or the group of hollow seats 101a, preferably without interruption.

In the example shown, in particular, the shape of the hollow seat 101a preferably, though not necessarily, substantially copies on a reduced scale the three-dimensional shape of the shaped airfoil 3 to be realised. On the other hand, the perimeter annular groove 101b preferably, though not necessarily, surrounds the hollow seat 101a while remaining at a predetermined minimum and preferably, though not necessarily, constant distance from the perimeter edge of the hollow seat 101a.

Obviously, the hollow seat 101a corresponds to the hollow seat 5a of the main airfoil-shaped body 5, whereas the perimeter annular groove 101b corresponds to the perimeter annular groove 5b of the main airfoil-shaped body 5.

With reference to Figures 4 and 5, the manufacturing process of lightened blade 1 also involves positioning in abutment on surface of the face of the oblong plate-like portion 101 where the hollow seat 101a and possibly the outer annular groove 101b are located, for covering the hollow seat 101a and, if present, the outer annular groove 101b, a thin metal covering plate 103 whose dimensions exceed those of the hollow seat 101a and, if present, those of the outer annular groove 101a, so as completely to cover the hollow seat 101a and, if present, the outer annular groove 101b.

More in detail, the covering plate 103 is dimensioned so as to cover the surface of the face of the oblong plate-like portion 101 of the semi-finished product 100, where the hollow seat 101a and the perimeter annular groove 101b are located, up to the larger lateral edges of the oblong plate-like portion 101.

The metal covering plate 103 is therefore arranged in abutment on surface of the face of the oblong plate-like portion 101 where the hollow seat 101a and the outer annular groove 101b are located, above and outside the hollow seat 101a and the outer annular groove 101b.

In the example shown, in particular, the covering plate 103 has a thickness preferably, though not necessarily, ranging between 1 and 4 mm.

Furthermore, in the example shown, the covering plate 103 is also preferably dimensioned so as to substantially cover the entire surface of the face of the oblong plate-like portion 101 where the hollow seat 101a and the outer annular groove 101b are located.

The covering plate 103 is therefore preferably dimensioned so as to substantially cover the entire surface of the face of the oblong plate-like portion 101 where the hollow seat 101a and the outer annular groove 101b are located.

With reference to Figures 5, 6 and 7, after placing the covering plate 103 substantially to cover the entire surface of the face of the oblong plate-like portion 101 where the hollow seat 101a and the outer annular groove 101b are located, the manufacturing process of lightened blade 1 involves rigidly and immovably fixing the covering plate 103 to the face of the oblong plate-like portion 101 where the hollow seat 101a and the outer annular groove 101b are located, by means of lap welding 7 which extends, preferably without interruption, along the entire perimeter strip or flap of covering plate 103 which directly rests on surface of the face of the oblong plate-like portion 101, outside the perimeter of the mouth of the hollow seat 101a and, if present, the perimeter annular groove 101b.

The term "lap welding" preferably indicates both welding with a lapped joint according to standard UNI EN ISO 17659:2006 (previously UNI EN 12345), and welding with an edge joint according to standard UNI EN ISO 17659:2006 (previously UNI EN 12345).

Preferably, though not necessarily, lap welding 7 may be performed with the MIG (Metal Inert Gas) welding procedure, and/or with the MAG Metal Active Gas) welding procedure, and/or with the TIG (Tungsten Inert Gas) welding procedure, and/or with the Stick or MMA (Metal Manual Arc) welding procedure, and/or with the EBW (Electron Beam Welding) welding procedure, and/or with the LBW (Laser Beam Welding) welding procedure, and/or braze welding. Alternatively, it is possible to use a combination of the above welding procedures.

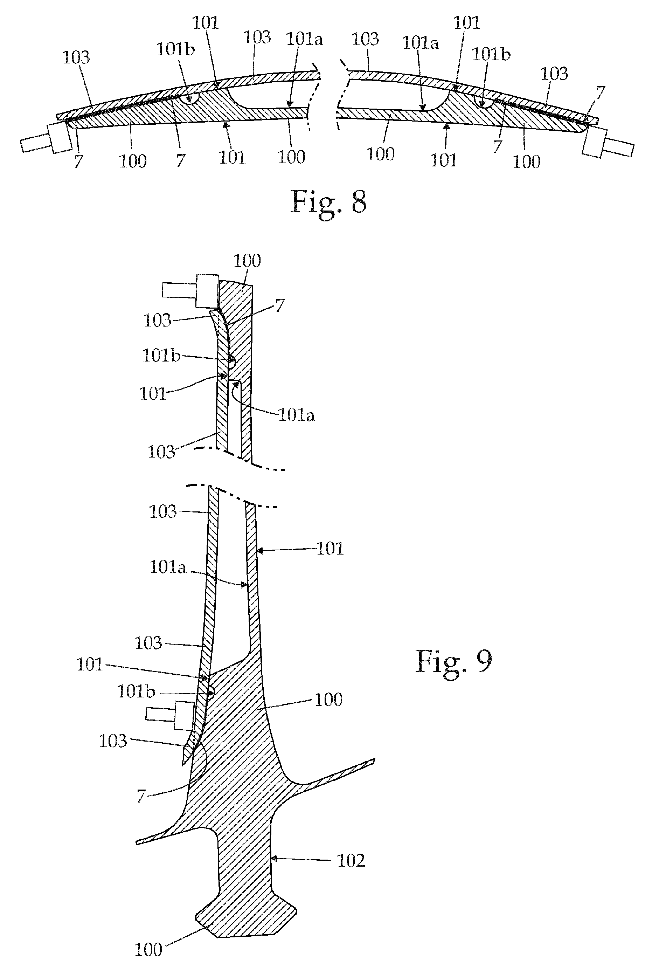

With reference to Figures 8 and 9, after completing welding of covering plate 103 onto the face of the oblong plate-like portion 101, the manufacturing process of lightened blade 1 involves stripping/removing, by means of milling or other mechanical machining with material removal, the excess material from the resulting work piece, so as to obtain the shaped airfoil 3 of the lightened blade 1 and possibly also the coupling shank 2 of said lightened blade 1.

More in detail, during the step of removing the excess material from the resulting work piece, the manufacturing process of the lightened blade 1 involves stripping/removing, by means of milling or other mechanical machining with material removal, any excess metal material of the covering plate 103 and the oblong plate-like portion 101, which is located at the larger lateral edge or edges of the oblong plate-like portion 101 (see Figure 8), so as to realise the leading edge 3a and trailing edge 3b of the shaped airfoil 3 of the lightened blade 1.

Possibly, during the step of removing the excess material from the resulting work piece, the manufacturing process of lightened blade 1 involves stripping/removing, by means of milling or other mechanical machining with material removal, the flaps of the covering plate 103 which cantilevered extend from surface of the face of the oblong plate-like portion 101 (see Figure 9); and/or stripping/removing, by means of milling or other mechanical machining with material removal, any other excess material located on faces of the oblong plate-like portion 101 and the covering plate 103, so as to obtain the shaped airfoil 3, and/or on the lower squat portion 102, so as to obtain the coupling shank 2 of the lightened blade 1.

At the end of the mechanical machining with material removal mentioned above, the oblong plate-like portion 101 of the semi-finished product 100 forms the main airfoil-shaped body 5 of the shaped airfoil 3, while the portion of the covering plate 103 which remains integral with the oblong plate-like portion 101 of the semi-finished product 100 forms the cover 6 of the shaped airfoil 3. The lower squat portion 102 of the semi-finished product 100, on the other hand, forms the coupling shank 2 of the lightened blade 1.

Advantages resulting from use of the above-described manufacturing process of a lightened blade 1 are large in number.

Firstly, the construction tolerances associated with cutting the covering plate 103 and positioning it on face of the oblong plate-like portion 101 of the semi-finished product 100, at closure of the hollow seat 101a and of the perimeter annular groove 101b, are at least of an amount greater than those required by the manufacturing process described in patent application US2006/0039792, with all the resulting advantages.

Furthermore, use of lap welding allows a significant increase in the extension of the welding zone, at great benefit of the mechanical strength of the welding. The greater extension of the welding zone also drastically reduces the depth of welding and, consequently, the maximum temperature reached during welding in the contact zone between the covering plate 103 and the face of the oblong plate-like portion 101. The reduction in the maximum welding temperature, in turn, significantly reduces the possibility of causing significant alterations to the structure of the crystal lattice of the material, minimising the risks of future formation of cracks.
The perimeter annular groove 5b also avoids, during welding of the covering plate 103 onto the oblong plate-like portion 101, part of the smelted material slipping inside the hollow seat 101b.

Lastly, the manufacturing process of lightened blade 1 allows the welding procedure to be changed as a function of the welding zone.

Clearly, changes may be made to lightened blade 1 and the relative manufacturing process as described above without, however, departing from the scope of the present invention.

For example, as an alternative, the manufacturing process of lightened blade 1 may involve rigidly and immovably fixing the covering plate 103 to the face of the oblong plate-like portion 101 where the hollow seat 101a and the outer annular groove 101b are located, by means of an intermediate layer of adhesive which extends, preferably without interruption, along the entire perimeter strip or flap of the covering plate 103 which rests directly on the surface of the face of the oblong plate-like portion 101, outside the perimeter of the mouth of the hollow seat 101a and, if present, the perimeter annular groove 101b.

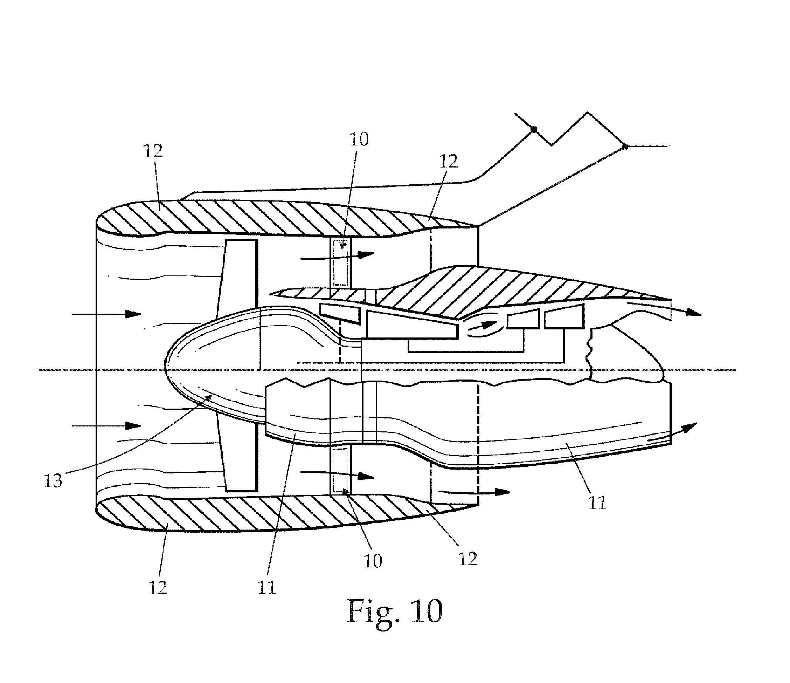

Furthermore, with reference to Figure 10, in addition to the manufacturing of stator or rotor blades of the compressor or fan of a turbine engine for aircraft, the manufacturing process described above may also be used to manufacture radial support blades 10 which rigidly connect the external casing 11 of the gas turbine to the tubular case 12 which surrounds the front fan 13 of the turbine engine for aircraft.

Each radial support blade 10, in fact, is formed by two end coupling shanks which are structured so as to be blocked rigidly, respectively on the outer casing 11 of the gas turbine and on the tubular case 12 which surrounds the front fan 13; and by a long central shaped airfoil which couples/ connects the two couplings shanks rigidly to each other, and is provided internally with a large weight-reducing recess, the three-dimensional shape of which preferably, though not necessarily, substantially copies a reduced scale the three-dimensional shape of said shaped airfoil.

## Claims

1. A manufacturing process of a lightened turbomachine blade (1) comprising the steps of
- obtaining a semi-finished product (100) provided with an oblong plate-like portion (101), the shape of which substantially approximates the shape of the main airfoil-shaped body (5) of the shaped airfoil (3) of the lightened blade (1) to be built; and
- obtaining, substantially at the centre of one of the two faces of said plate-like portion (101), at least one hollow seat (101a) of predetermined shape;
the construction method being **characterised by** additionally comprising also the steps of
- positioning in abutment on the surface of the face of the plate-like portion (101) where said hollow seat (101a) is located, above said hollow seat (101a), a covering plate (103) which is dimensioned so as to cover the surface of the face of the plate-like portion (101) where said hollow seat (101a) is located, up to the larger lateral edges of the oblong plate-like portion (101), so as to completely cover the hollow seat (101a) while remaining outside said hollow seat (101a);
- fixing in a rigid and unmovable way the covering plate (103) on the face of the plate-like portion (101) by means of an adhesive layer or lap welding (7) that affects the perimeter strip or flap of the covering plate (103) that rests directly on the surface of the face of the plate-like portion (101), outside the hollow seat (101a); and finally
- stripping/removing, by means of mechanical machining with material removal, the excess material from the covering plate (103) and the plate-like portion (101) which is located at the larger lateral edges of the plate-like portion (101), so as to realize the leading (3a) and the trailing edges (3b) of the shaped airfoil (3), thus to obtain the shaped airfoil (3) of the lightened plate (1).

2. Manufacturing process of a lightened blade according to claim 1, **characterised in that** the covering plate (103) is dimensioned so as to substantially cover the whole surface of the face of the oblong plate-like portion (101) where the hollow seat (101a) is located.

3. Manufacturing process of a lightened blade according to claim 1 or 2, **characterized by** also comprising the step of obtaining, on the face of the plate-like portion (101) which houses said hollow seat (101a), a perimeter annular groove (101b) surrounding said hollow seat (101a).

4. Manufacturing process of a lightened blade according to claim 3, **characterized in that** the perimeter annular groove (101b) surrounds the hollow seat (101a) without interruption.

5. Manufacturing process of a lightened blade according to claim 4, **characterized in that** the perimeter annular groove (101b) surrounds the hollow seat (101a) while remaining at a predetermined minimum distance from the perimeter edge of the hollow seat (101a).

6. Manufacturing process of a lightened blade according to claim 3, 4 or 5, **characterized in that** the covering plate (103) is fixed on the face of the plate-like portion (101) by lap welding or overlapping bonding (7) that affects the perimeter strip or flap of the covering plate (103) that rests directly on surface of the face of the plate-like portion (101), outside the perimeter annular groove (101b).

7. Manufacturing process of a lightened blade according to any one of the preceding claims, **characterized in that** the step of stripping/removing the excess material from the resulting work piece comprises the step of stripping/removing, by means of mechanical machining with material removal, the flaps of the covering plate (103) which cantilever projecting from the surface of the face of the plate-like portion (101).

8. Manufacturing process of a lightened blade according to any one of the preceding claims, **characterized in that** the semi-finished product (100) also comprises a squat lower portion (102) whose shape approximates the shape of the coupling shank (2) of the lightened blade (1), and that the step of stripping/removing the excess material from the resulting work piece comprises the step of stripping/removing, by means of mechanical machining with material removal, any excess material localized on the squat lower portion (102) so as to obtain the coupling shank (2) of the lightened blade (1).

9. Manufacturing process of a lightened blade according to any one of the preceding claims, **characterized in that** the hollow seat (101a) on the face of said oblong plate-like portion (101) has an extension exceeding 40% of the total surface of the same face of the plate-like portion (101).

10. Manufacturing process of a lightened blade according to any one of the preceding claims, **characterized in that** the shape of the hollow seat (101a) substantially copies on a reduced scale the three-dimensional shape of the shaped airfoil (3) to be realised.

11. Manufacturing process of a lightened blade according to any one of the preceding claims, **characterized in that** the layer of adhesive or the lap welding (7) extends without interruption along the entire perimeter strip or flap of the covering plate (103) that rests directly on surface of the face of the plate-like portion (101), outside the hollow seat (101a).

12. A lightened turbomachine blade (1) of the type comprising at least one coupling shank (2) and a shaped airfoil (3) which is rigidly coupled/connected with said coupling shank (2) and is internally provided with a large weight-reducing recess (4);
said shaped airfoil (3) being formed of a main airfoil-shaped body (5) which presents, substantially at the centre of one of the two faces, at least one hollow seat (5a) of predetermined shape; and a cover plate (6) which covers the face of the airfoil-shaped body (5) where the hollow seat (5a) is located, so as to close said hollow seat (5a) obtaining the weight-reducing recess (4), and is immovably fixed on the face of the airfoil-shaped body (5) by means of an adhesive layer or a lap weld that affects the perimeter strip or flap (6a) of the cover (6) that rests directly on the surface of the face of the main airfoil-shaped body (5), outside the hollow seat (5a);
said blade being **characterised in that** the cover plate (6) is dimensioned so as to extend on surface of the face of the main airfoil-shaped body (5) which houses the hollow seat (5a), up to reach both larger lateral edges of the main airfoil-shaped body (5), so as also to form part of the leading edge (3a) and the trailing edge (3b) of the shaped airfoil (3) of the lightened blade (1).

13. Lightened blade according to claim 12, **characterized in that** the main airfoil-shaped body (5) is also provided with a perimeter annular groove (5b) that substantially surrounds the hollow seat (5a), and **in that** the adhesive layer or the lap weld affects the perimeter portion of the face of the main airfoil-shaped body (5) that is located outside the annular groove (5b).

14. Lightened blade according to claim 12 or 13, **characterised in that** said hollow seat (5a) has an extension exceeding 40% of the total surface of the face of the main airfoil-shaped body (5) where the hollow seat (5a) is.

15. Lightened blade according to claim 12, 13 or 14, **characterized in that** said main airfoil-shaped body (5) is made in one piece with said coupling shank (2).
